(19) Europäisches Patentamt

European Patent Office

Office européen des brevets

(11) EP 3 203 670 A1

(12) EUROPEAN PATENT APPLICATION

(43) Date of publication:
09.08.2017 Bulletin 2017/32

(51) Int Cl.:
H04L 1/18 (2006.01)

(21) Application number: 17151710.5

(22) Date of filing: 17.01.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 05.02.2016 US 201615016931

(71) Applicant: Nokia Solutions and Networks Oy
02610 Espoo (FI)

(72) Inventor: Kroener, Hans
73312 Geislingen (DE)

(74) Representative: Borgström, Markus et al
Nokia Solutions and Networks Oy
CEF T&I IPR Administration
St.-Martin-Strasse 76
80240 Munich (DE)

(54) METHOD AND APPARATUS FOR IMPLEMENTING A RETRANSMISSION SCHEME

(57) A method and apparatus may include transmitting a first transmission to a user equipment. The first transmission is transmitted using a first hybrid-automatic-repeat-request process. The method may also include transmitting a second transmission using the first hybrid-automatic-repeat-request process. The second transmission is transmitted before receiving a hybrid-automatic-repeat-request feedback for the first transmission if all hybrid-automatic-repeat-request processes for the user equipment are currently in use.

FIG 2

EP 3 203 670 A1

**Description**

BACKGROUND:

Field:

Certain embodiments of the present invention relate to implementing a retransmission scheme.

Description of the Related Art:

Long-term Evolution (LTE) is a standard for wireless communication that seeks to provide improved speed and capacity for wireless communications by using new modulation/signal processing techniques. The standard was proposed by the 3rd Generation Partnership Project (3GPP), and is based upon previous network technologies. Since its inception, LTE has seen extensive deployment in a wide variety of contexts involving the communication of data.

SUMMARY:

According to a first embodiment, a method may include transmitting, by a network node, a first transmission to a user equipment. The first transmission is transmitted using a first hybrid-automatic-repeat-request process. The method may also include transmitting, by the network node, a second transmission using the first hybrid-automatic-repeat-request process. The second transmission is transmitted before receiving a hybrid-automatic-repeat-request feedback for the first transmission if all hybrid-automatic-repeat-request processes for the user equipment are in currently in use. The second transmission is typically transmitted if the network has new data to send, or if there is stored data from other hybrid-automatic-repeat-request (HARQ) processes that may need to be resent.

In the method of the first embodiment, the method may also include storing data corresponding to a copy of the first transmission. The method may also include receiving the hybrid-automatic-repeat-request feedback for the first transmission. The method may also include retransmitting the first transmission using a second hybrid-automatic-repeat-request process, if the received hybrid-automatic-repeat-request feedback for the first transmission is NACK. With certain embodiments, if HARQ feedback from the user equipment is missing, the method may also perform retransmitting of the first transmission using the second hybrid-automatic-repeat-request process. In one example, there may be a lack of feedback detected by an uplink receiver (of the network). Certain embodiments may use a timer to supervise/determine whether HARQ feedback is missing. The retransmitting uses the stored data. The second hybrid-automatic-repeat-request process uses a redundancy version that is self-decodable.

In the method of the first embodiment, the method may also include deleting the stored data, if the hybrid-automatic-repeat-request feedback is ACK.

In the method of the first embodiment, the second transmission is transmitted when there are no other users that can use a radio channel of the network node, and/or when the user equipment has a high quality-of-service requirement or high quality-of-experience requirement compared to other users.

In the method of the first embodiment, the transmitting the first transmission and the transmitting the second transmission are performed only if the user equipment is in a good radio propagation condition.

In the method of the first embodiment, the storing the data corresponding to the copy of the first transmission comprises storing the data in radio-link-control layer.

In the method of the first embodiment, the storing the data corresponding to the copy of the first transmission comprises storing the data in at least one of radio-link protocol data units, media access control protocol data units, and layer 1 protocol data units.

In the method of the first embodiment, the storing the data corresponding to the copy of the first transmission comprises storing the data as turbo-coded data.

According to a second embodiment, an apparatus may include at least one processor. The apparatus may also include at least one memory including computer program code. The at least one memory and the computer program code may be configured, with the at least one processor, to cause the apparatus at least to transmit a first transmission to a user equipment. The first transmission is transmitted using a first hybrid-automatic-repeat-request process. The apparatus may also be caused to transmit a second transmission using the first hybrid-automatic-repeat-request process. The second transmission is transmitted before receiving a hybrid-automatic-repeat-request feedback for the first transmission if all hybrid-automatic-repeat-request processes for the user equipment are currently in use.

In the apparatus of the second embodiment, the apparatus may be further caused to store data corresponding to a copy of the first transmission. The apparatus may also be caused to receive the hybrid-automatic-repeat-request feedback for the first transmission. The apparatus may also be caused to retransmit the first transmission using a second hybrid-automatic-repeat-request process, if the received hybrid-automatic-repeat-request feedback is NACK. The retransmitting uses the stored data. The second hybrid-automatic-repeat-request process uses a redundancy version that is self-decodable.

In the apparatus of the second embodiment, the apparatus is further caused to delete the stored data, if the hybrid-automatic-repeat-request feedback is ACK.

In the apparatus of the second embodiment, the second transmission is transmitted when there are no other users that can use a radio channel of the network node, and/or when the user equipment has a high quality-of-service requirement or high quality-of-experience requirement compared to other users.

In the apparatus of the second embodiment, the transmitting the first transmission and the transmitting the second transmission are performed only if the user equipment is in a good radio propagation condition.

In the apparatus of the second embodiment, the storing the data corresponding to the copy of the first transmission comprises storing the data in radio-link-control layer.

In the apparatus of the second embodiment, the storing the data corresponding to the copy of the first transmission comprises storing the data in at least one of radio-link protocol data units, media access control protocol data units, and layer 1 protocol data units.

In the apparatus of the second embodiment, the storing the data corresponding to the copy of the first transmission comprises storing the data as turbo-coded data.

According to a third embodiment, a computer program product may be embodied on a non-transitory computer readable medium. The computer program product may be configured to control a processor to perform a method according to the first embodiment.

According to a fourth embodiment, a method may include transmitting, by a user equipment, a first transmission to a network node. The first transmission is transmitted using a first hybrid-automatic-repeat-request process. The method may also include transmitting, by the user equipment, a second transmission using the first hybrid-automatic-repeat-request process. The first transmission and the second transmission are transmitted based on commands of a radio interface scheduler of the network of the user equipment.

According to a fifth embodiment, an apparatus may include at least one processor. The apparatus may also include at least one memory including computer program code. The at least one memory and the computer program code may be configured, with the at least one processor, to cause the apparatus at least to transmit a first transmission to a network node. The first transmission is transmitted using a first hybrid-automatic-repeat-request process. The apparatus may also be caused to transmit a second transmission using the first hybrid-automatic-repeat-request process. The first transmission and the second transmission are transmitted based on commands of a radio interface scheduler of the network of the apparatus.

According to a sixth embodiment, a computer program product may be embodied on a non-transitory computer readable medium. The computer program product configured to control a processor to perform a method according to the fourth embodiment.

BRIEF DESCRIPTION OF THE DRAWINGS:

For proper understanding of the invention, reference should be made to the accompanying drawings, wherein:

Figure 1 illustrates single user throughput as a function of one-way fronthaul latency.

Fig. 2 illustrates implementation options of certain embodiments of the present invention.

Fig. 3 provides some numerical examples which demonstrate the benefits provided by certain embodiments of the present invention.

Fig. 4 illustrates uplink/downlink throughputs of the current approach and the uplink/downlink throughputs as provided by certain embodiments of the present invention.

Fig. 5 illustrates a flowchart of a method in accordance with certain embodiments of the invention.

Fig. 6 illustrates a flowchart of a method in accordance with certain embodiments of the invention.

Fig. 7 illustrates an apparatus in accordance with certain embodiments of the invention.

Fig. 8 illustrates an apparatus in accordance with certain embodiments of the invention.

Fig. 9 illustrates an apparatus in accordance with certain embodiments of the invention.

DETAILED DESCRIPTION:

Certain embodiments of the present invention are directed to improving mobile communication, especially for LTE and 5th Generation Mobile Networks (5G). These networks may apply hybrid automatic repeat request (HARQ) protocols to cope with errors that are introduced at a radio interface. The difference between a normal automatic repeat request and a HARQ is that HARQ does not resend an identical data packet in the event of a transmission error. Rather, with HARQ, different coded versions of the same data packet are transmitted in the event of an earlier transmission error. With HARQ, the initial transmissions and the retransmissions may, therefore, use different redundancy versions of the coded data. In addition, the receiver of HARQ transmissions may store soft-decision information relating to the previous transmissions in order to improve the probability that a retransmission is decoded correctly. Therefore, with HARQ, the probability that a retransmission is decoded correctly is increased, as compared to a retransmission in a normal ARQ process.

Each HARQ transmission may be conducted by a HARQ process, and the number of parallel HARQ processes is typically limited in order to reduce an amount of complexity that needs to be managed by the user equipment (UE) and that needs to be managed by the evolved Node B. For example, by limiting the number of parallel HARQ processes, the amount of buffering that is needed for soft bits may also be limited. In LTE networks, the use of 8 parallel HARQ processes has been standardized. The number of HARQ processes and the time interval for each transmission (i.e., the transmission time interval (TTI)) may define a maximum roundtrip delay. The maximum roundtrip delay may be a duration of time that corresponds to the sum of a downlink (DL) transmission time, an uplink (UL) transmission time, an eNode B processing time, and/or a UE processing time.

There may be an increasing number of network scenarios where there is a delayed HARQ feedback. Delayed HARQ feedback occurs, for example, when the acknowledgement / not acknowledgement (ACK/NACK) message arrives too late, such that a retransmission cannot be performed in time. The scenarios of delayed HARQ feedback include, but are not limited to, the following.

A first example of delayed HARQ feedback may occur with cloud Radio Access Network (RAN) solutions where the scheduler and the HARQ controller, or even the complete HARQ processing, is shifted into a cloud RAN. The cloud RAN solutions may impose an additional transport delay between a radio site and a cloud network, adding to the HARQ feedback loop, and thus resulting in delayed HARQ feedback.

A second example of delayed HARQ feedback may occur with intersite DL carrier aggregation. With intersite DL carrier aggregation, the downlink traffic is transmitted from two different radio sites that are interconnected by a normal backhaul network. Also, the HARQ ACK/NACK feedback for a secondary cell will be delayed if the HARQ feedback is sent on a primary cell that is located at a different site.

A third example of delayed HARQ feedback may occur when implementing latency reduction in LTE networks. 3GPP has started a new study item to reduce latency by shortening the Transmission Time Intervals (TTIs). This shortening of the TTIs may complicate the usage of cloud solutions and intersite carrier aggregation, and thus may result in delayed HARQ feedback.

A fourth example of delayed HARQ feedback may occur with 5G networks, where the 5G networks may require lower latency when performing transmissions but should not have excessive UE buffering. This fourth example of delayed HARQ feedback may also occur when a cloud RAN solution is used to support 5G.

A fifth example of delayed HARQ feedback may occur with dynamic point selection. With this example, the downlink user data can be sent from a small set of transmission points or cells, depending on radio propagation and/or load conditions, whereas the HARQ feedback might come to the primary transmission point. The transmission of the HARQ feedback from this primary transmission point to the actual transmission points may cause additional delay.

With all of the above scenarios of delayed HARQ feedback, a proper HARQ ACK/NACK feedback loop timing cannot be kept, and the eNode B does not know whether a HARQ process should be used for a new transmission (which results in a flushing/removal of the content of the previous transmission for this HARQ process), or whether the HARQ content (of the previous transmission) still needs to be kept/maintained for a later retransmission.

The current approach for LTE networks is to not use the HARQ process when the HARQ feedback for this HARQ process is still missing. For the downlink, using the current approach is generally straightforward because an asynchronous HARQ is used, where the HARQ process can be assigned to any TTI. So, with the current approach, in the event that a HARQ feedback is missing for a HARQ process, this HARQ process is simply not used. This HARQ process is neither used for a new transmission nor for a retransmission. Therefore, with the current approach, if a UE has all HARQ processes in use, other UEs will be scheduled over the radio interface. If there are no other UEs that have data for transmission, then the radio interface may remain unused. The HARQ process will be used for a later retransmission in the event of Not Acknowledged (NACK), or for a later new transmission (in case of ACK), when the ACK/NACK information has become available.

With the current approach, for uplink, a synchronous HARQ process is used in LTE. Therefore, with the current approach, the mechanism that is used for uplink is more complicated than the mechanism that is used for downlink. The eNode B may need to send an ACK to the UE, even if the UL data has not been successfully decoded by the eNode B, in order to avoid having the UE perform a non-adaptive HARQ retransmission. If the data can be later successfully decoded by the eNode B, everything is determined to be fine, and the HARQ process will be used for a new transmission (which results in giving a grant to the UE and toggling a New Data Indicator (NDI)).

In the event that the data cannot be successfully decoded by the eNode B (for example, if the outcome is a NACK), then the eNode B would order a retransmission by giving the UE a grant, without toggling the NDI. The retransmission would be possible because the HARQ process has not been used in the meantime, for a new transmission, and therefore the HARQ data is still stored in the UE.

The drawback of this current approach is that the peak data rates, the cell-edge data rates, and/or the data rates of guaranteed-bit-rate UEs, may be severely impacted because only a part of the transmission opportunities can be used. For transmitting during peak data rates, the UE may need to use every transmission opportunity. For cell edge users or guaranteed-bit-rate users, these users typically need to be scheduled rather often. Therefore, the scheme of the current approach may cause severe performance degradation.

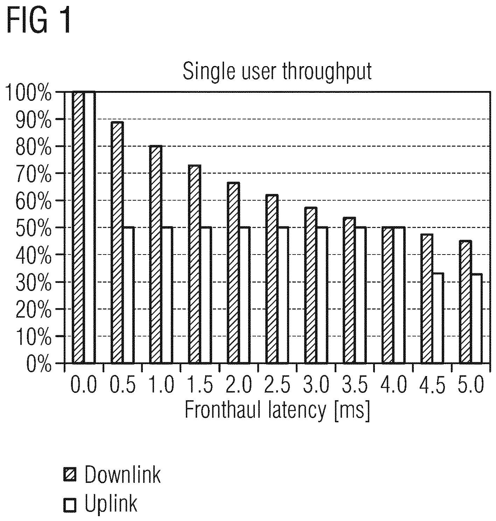

Figure 1 illustrates single user throughput as a function of one-way fronthaul latency. For downlink, with a 0.5 ms fronthaul delay (corresponding to a 1 ms additional HARQ delay), when 8 HARQ processes are used, one HARQ process is skipped. Downlink corresponds to transmitting data from a network to a user equipment. Out of 9 TTIs, only 8 TTIs can be used for data transmission. So, the throughput is reduced to 8/9 x 100%. For 1 ms, the throughput is reduced to 8/10 x 100%, and so on. For the uplink, a 0.5 ms one-way delay causes a throughput degradation by 50%, because a skipped HARQ process can be reused only 8 ms later (because a synchronous HARQ is used). Uplink corresponds to transmitting data from a user equipment to a network. With the current approaches, the loss can be partly compensated in a loaded network, where the radio resources can be given to other users, but this loss continues to be a serious drawback, especially for guaranteed bit rate services of users that are in bad propagation conditions.

With certain embodiments, if the HARQ feedback (ACK/NACK) is not available in time, then the HARQ process will be used for an initial transmission of new data, if there are unused resources over the radio interface that cannot be used by other users, and if the corresponding UE has data in its buffer. The use of the HARQ process for the transmission of new data may depend on the radio propagation conditions or the radio quality of the UE. This scheme may not be used in bad radio propagation conditions because there may be a need to prevent the HARQ gain from storing the soft bit information on the receiver side, and a need to prevent a combining of the soft bit information with a later transmission. However, in normal and good radio propagation conditions, the HARQ process may be used to transmit new data.

In the cases where other UEs have data in buffers and where those UEs have free HARQ processes, it is preferable to give the radio resources to those users because those users can benefit from the HARQ gains. However, this may also depend on quality of service aspects. With regard to using the HARQ process if the corresponding UE has data in its buffer, the UE would have new data available for transmission that has not yet been sent by the UE. The initial transmission may correspond to a new transmission, or may correspond to a transmission of data of an earlier transmitted data block. The HARQ ACK/NACK may be considered to be late if it has not arrived by the time a transmission/retransmission of a same data block is to occur. In LTE, the HARQ ACK/NACK may be considered to be late if it has not arrived after 8 TTIs. A new transmission may refer to a transmission of new data. New transmissions may be sent with an initial HARQ transmission. An initial HARQ transmission may refer to transmission of the first redundancy version in a case of incremental redundancy HARQ. This first redundancy version should be self-decodable and should not require soft-bit information from earlier transmissions.

The HARQ ACK/NACK feedback is delayed if, in DL, all HARQ processes are used and no feedback is available for any of the HARQ processes. Normally, this would be the case if the UE is scheduled for transmission in every TTI and the HARQ feedback for a certain HARQ process is not available when the scheduler has to decide on whether a used HARQ process is to be used for an initial transmission of new data or for a retransmission of earlier sent data. For UL, there is a synchronous HARQ use and, therefore, the HARQ feedback for a certain HARQ process needs to be available when the scheduler needs to decide on the usage of exactly that HARQ process for either a transmission of new data or a retransmission of the data that was sent earlier by this HARQ process. However, the uncoded data (in the form of Radio Link Control (RLC) Protocol Data Unit (PDU)/ transport block) or even the coded data will still be stored in an additional buffer as long as there is no available final ACK/NACK decision. If the ACK/NACK feedback becomes available later on, in case of an ACK, the data stored in this additional buffer can be deleted because no further retransmission of data is needed. However, in case of a NACK feedback, the data may be retrieved from this extra buffer in order to perform an initial HARQ transmission, preferably in the next HARQ process that can be used. With certain embodiments, initial HARQ transmission may be transmission of a first redundancy version of the HARQ scheme. In general, certain embodiments may perform a HARQ transmission for which there is no available soft data in the receiver.

As such, certain embodiments of the present invention use a HARQ retransmission scheme in the event that NACK information is not available in time. Certain embodiments use a simple HARQ type 1, without soft combining, if the NACK information is received late in time (an initial HARQ transmission is self-decodable and can be considered to be Simple HARQ type 1, without soft combining).

With regard to implementation, for LTE downlink transmission, certain embodiments may be implemented without any change of the existing LTE standard, because the eNode B is in control of any retransmission scheme. However, the eNode B may need to store the data that is not yet finally acknowledged (via the HARQ feedback) in an additional buffer. The information can be stored either as: (Option 1) Radio Link Control (RLC) Protocol Data Units (PDUs), (Option 2) Transport blocks (Medium Access Control (MAC) PDUs), and/or (Option 3) Turbo-coded data.

When the data is stored as RLC PDUs, in order for an ARQ retransmission to occur, certain embodiments perform MAC processing, encoding of data, and rate matching for the corresponding redundancy version, in order to create a new HARQ data block. The new HARQ data block can then be used for retransmission. This approach may be a flexible approach because the transport block size may be changed to adjust to a new transport format over a radio interface. For example, new transport formats may have different modulation and coding schemes, or a different number of physical resource blocks. There are at least 3 potential methods to adjust the size of the data to a new transport block, in the event of changing radio or load conditions. One method adds padding if the new selected transport block is larger than the sum of RLC PDUs + MAC header.

Another method performs different multiplexing of RLC PDUs into one MAC PDU/Transport block (so as to remove one RLC PDU or add one RLC PDU in case the transport block is smaller or larger than in the previous transmission).

Another method of certain embodiments may use RLC re-segmentation, if the RLC PDU does not fit the transport block (where the transport block is too large or too small). In general, a combination of different methods may be used.

Option 2 may store data within transport blocks, and a channel encoding/rate matching may be needed in order to create the HARQ data block. Option 2 may have lower processing requirements than option 1, while having similar buffering requirements as option 1. However, with option 2, the flexibility may be limited because option 2 uses Physical-Resource-Block / Modulation-and-Coding-Scheme (PRB/MCS) combinations that provide a same transport block size.

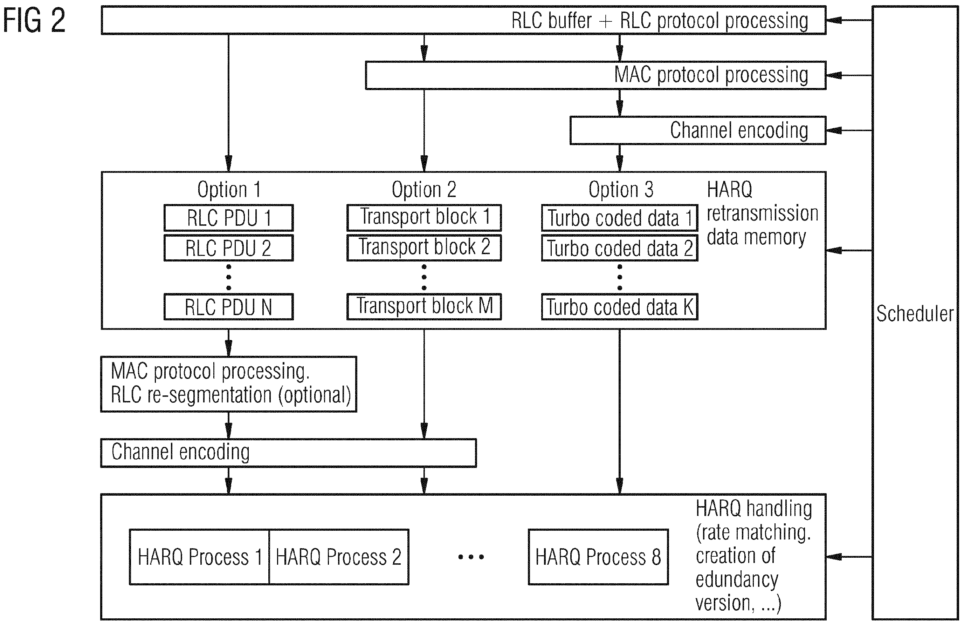

Option 3 may store the encoded data, which minimizes processing. However, option 3 may require more memory and may limit the flexibility. The flexibility may be limited because the same MCS/PRB combination may need to be used as for the earlier transmission. Fig. 2 illustrates different options of embodiments of the present invention.

The number of RLC PDUs, transport blocks, and turbo-coded data instances are different due to RLC PDU multiplexing and splitting of transport blocks to different code blocks. Referring to Fig. 2, data flows are represented by downward lines, and the control of all the entities is represented by the arrows that progress towards the left. The whole scheme of certain embodiments may be controlled by a scheduler that decides on which MCS/PRBs are to be used, which channel encoding is to be used, and which redundancy version should be used, for example.

While the above-described embodiments may be universally applied on uplink (UL) and downlink (DL), the embodiments can be implemented in downlink without any change to the LTE radio standard. The embodiments may be implemented in downlink by changing the behaviour/configuration of the eNode B and by adding buffering capabilities in the eNode B. On the other hand, for UL, the scheme of certain embodiments may require standardization changes because the UL data handling is in the UE, whereas the scheduling decision is in the eNode B. However, these standardization changes could be introduced as a part of the Study Item for LTE latency improvements. For 5G networks, a scheme of certain embodiments may be introduced from the very beginning.

One advantage of certain embodiments is that the proposed scheme does not lead to any heavy throughput degradation as compared to the current approaches.

With certain embodiments, for an ideal radio channel, where no errors occur, the throughput of the current approaches can use 8 HARQ processes, but a following $\Delta$ TTIs cannot be used because the HARQ feedback is delayed by $\Delta$ ($\Delta$ defines the add-on round trip time in number of TTIs, where the current size of a TTI in LTE is equivalent to 1 ms).

Therefore, the DL throughput for a single UE, for the ideal channel (with no block errors) can be calculated as: $DL\_TP = Ideal\_TP \cdot 8/(8 + \Delta)$.

For UL, the HARQ process may not be used for 8 TTIs, if there is a delay of up to 8 TTIs or 16 TTIs. When there is a delay that is larger than 8 TTIs but less than 16 TTIs, the uplink throughput for a single UE, can be described by the following formula:

$$UL\_TP = Ideal\_TP \cdot 8/(8 + 8 \cdot \lceil \Delta/8 \rceil).$$

Where $\lceil x \rceil$ denotes a ceiling of x, for example, rounding up x to the next integer value.

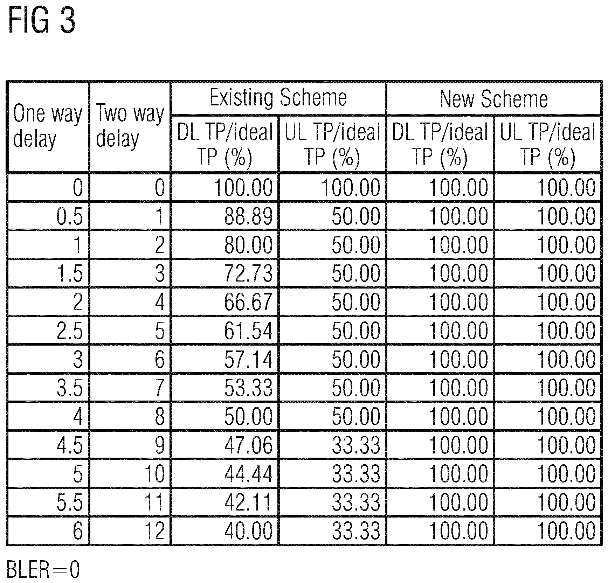

Certain embodiments of the present invention may use all HARQ processes, all the time, if there is enough data to send. If transmission errors do not occur, this configuration generally results in peak throughput. Fig. 3 provides some numerical examples which demonstrate the benefits provided by embodiments of the present invention.

In the event of a non-ideal radio channel, the throughput may be reduced due to retransmissions. With a HARQ retransmission scheme, an optimistic assumption may be that the first re-transmission is always successful. Therefore, the average number of transmissions of a transport block may be lower bounded by: 1·(1-*BLER*)+2·*BLER*=1+*BLER*, where BLER corresponds to the block error rate of an initial transmission.

So the DL throughput of the current approaches may be upper bounded by *DL_TP* < *Ideal_TP*·.8/(8 + Δ)/(1 + *BLER*), and the uplink throughput may be upper bounded by *UL_TP* < *Ideal_TP*·8/(8 + 8·⌈Δ/8⌉)/(1 + *BLER*).

Certain embodiments may be directed to a new scheme that may use an initial transmission (ARQ transmission) when no HARQ feedback is available. The new scheme may use a HARQ retransmission if the HARQ feedback becomes available. A transmission of new data may be transmitted with a HARQ process that has already been used, if the ACK/NACK is not available, and/or when all other HARQ processes are used. If a NACK then becomes available at a later time, then a retransmission is performed with a simple HARQ type 1 transmission. For performing throughput estimation, a worst case assumption is that each retransmission is based on an initial transmission. In this case, a new HARQ transmission of the data that needs to be retransmitted is started by using the same redundancy version as in an initial transmission. So, a re-transmission will fail with BLER. So, the average number of needed transmissions for one transport block can be approximated by:

$$1 \cdot (1 - BLER) + 2 \cdot (1 - BLER) \cdot BLER + 3 \cdot (1 - BLER) \cdot BLER^2 + 4 \cdot (1 - BLER) \cdot BLER^3 + \dots$$

$$= (1 - BLER) \cdot \sum_{n=1}^{\infty} n \cdot BLER^{n-1}$$

$$= (1 - BLER) \cdot \frac{1}{(1 - BLER)^2}$$

$$= \frac{1}{1 - BLER}$$

So, the DL throughput of the new scheme, in accordance with certain embodiments of the present invention, may be lower bounded by:

$$DL\_TP > Ideal\_TP \cdot 8/(8 + \Delta) \cdot (1 - BLER)$$

and the UL throughput of the new proposed scheme may be lower bounded by:

$$UL\_TP > Ideal\_TP \cdot 8/(8 + 8 \cdot \lceil \Delta / 8 \rceil) \cdot (1 - BLER)$$

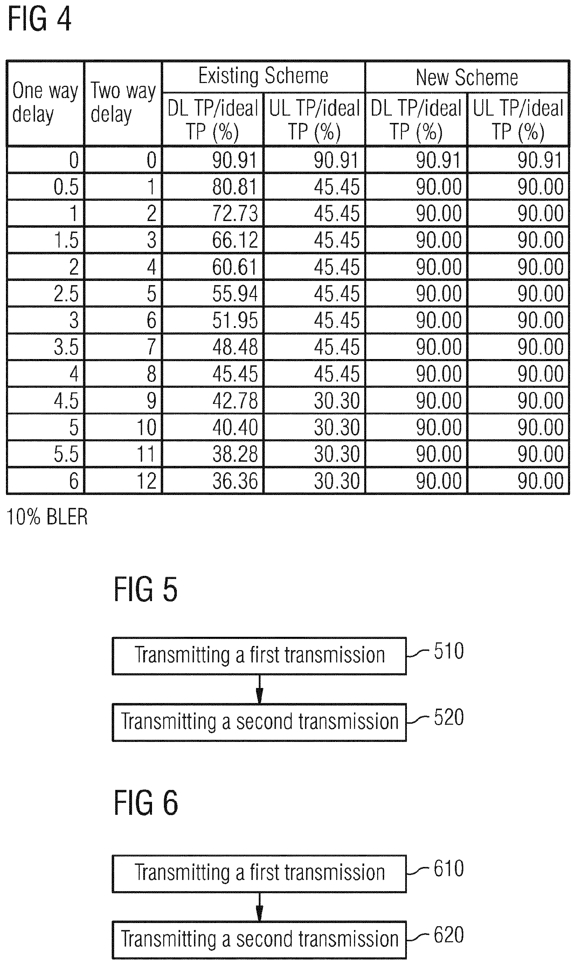

Fig. 4 illustrates uplink/downlink throughputs of the current approach and the uplink/downlink throughputs as provided by certain embodiments of the present invention. Fig. 4 provides some numerical examples of how the throughput is affected when the block error rate of the initial transmission is equal to 10%, which is the typical value for an impaired radio channel.

Referring to the results of Fig. 4, the throughput drop of the scheme of certain embodiments may lead to less than a 1 % throughput degradation, whereas the current approach may experience severe throughput degradation.

Fig. 5 illustrates a flowchart of a method in accordance with certain embodiments of the invention. The method illustrated in Fig. 5 includes, at 510, transmitting, by a network node, a first transmission to a user equipment. The first transmission is transmitted using a first hybrid-automatic-repeat-request process. The method may also include, at 520, transmitting, by the network node, a second transmission using the first hybrid-automatic-repeat-request process. The second transmission is transmitted before receiving a hybrid-automatic-repeat-request feedback for the first transmission if all hybrid-automatic-repeat-request processes for the user equipment are currently in use.

Fig. 6 illustrates a flowchart of a method in accordance with certain embodiments of the invention. The method illustrated in Fig. 6 includes, at 610, transmitting, by a user equipment, a first transmission to a network node. The first transmission is transmitted using a first hybrid-automatic-repeat-request process. The method may also include, at 620, transmitting, by the user equipment, a second transmission using the first hybrid-automatic-repeat-request process. The first transmission and the second transmission are transmitted based on commands of a radio interface scheduler of the network of the user equipment.

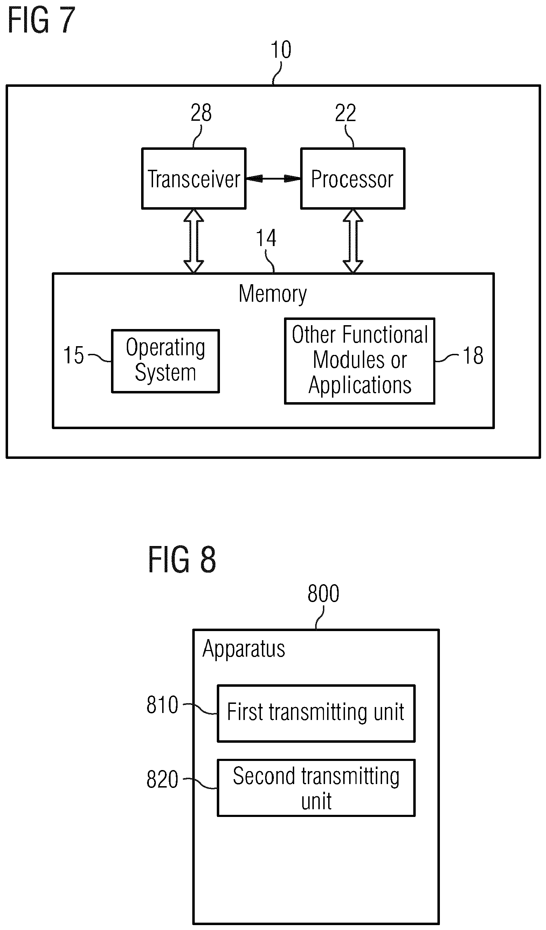

Fig. 7 illustrates an apparatus 10 according to another embodiment. In one embodiment, apparatus 10 may be a network node such as a base station and/or an evolved Node B. In another embodiment, apparatus 10 may be a user device.

Apparatus 10 includes a processor 22 for processing information and executing instructions or operations. Processor 22 may be any type of general or specific purpose processor. While a single processor 22 is shown in Fig. 7, multiple processors may be utilized according to other embodiments. In fact, processor 22 may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as examples.

Apparatus 10 further includes a memory 14, coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory ("RAM"), read only memory ("ROM"), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

Apparatus 10 may also include one or more antennas (not shown) for transmitting and receiving signals and/or data to and from apparatus 10. Apparatus 10 may further include a transceiver 28 that modulates information on to a carrier waveform for transmission by the antenna(s) and demodulates information received via the antenna(s) for further processing by other elements of apparatus 10. In other embodiments, transceiver 28 may be capable of transmitting and receiving signals or data directly.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules may include an operating system 15 that provides operating system functionality for apparatus 10. The memory may also store one or more functional modules 18, such as an application or program, to provide additional functionality for apparatus 10. The components of apparatus 10 may be implemented in hardware, or as any suitable combination of hardware and software.

Apparatus 10 may be configured to transmit a first transmission to a user equipment. The first transmission is transmitted using a first hybrid-automatic-repeat-request process. Apparatus 10 may also be configured to transmit a second transmission using the first hybrid-automatic-repeat-request process. The second transmission is transmitted before receiving a hybrid-automatic-repeat-request feedback for the first transmission. The second transmission is transmitted when all hybrid-automatic-repeat-request processes for the user equipment are in use.

Apparatus 10 may be configured to transmit a first transmission to a network node. The first transmission is transmitted using a first hybrid-automatic-repeat-request process. Apparatus 10 may also be configured to transmit a second transmission using the first hybrid-automatic-repeat-request process. The second transmission is transmitted before receiving a hybrid-automatic-repeat-request feedback for the first transmission, and the second transmission is transmitted when all hybrid-automatic-repeat-request processes for the user equipment are in use.

Fig. 8 illustrates an apparatus in accordance with certain embodiments of the invention. Apparatus 800 can be a network node such as a base station and/or an evolved Node B, for example. Apparatus 800 may also include a first transmitting unit 810 that transmits a first transmission to a user equipment. The first transmission is transmitted using a first hybrid-automatic-repeat-request process. Apparatus 800 may also include a second transmitting unit 820 that transmits a second transmission using the first hybrid-automatic-repeat-request process. The second transmission is transmitted before receiving a hybrid-automatic-repeat-request feedback for the first transmission if all hybrid-automatic-repeat-request processes for the user equipment are currently in use.

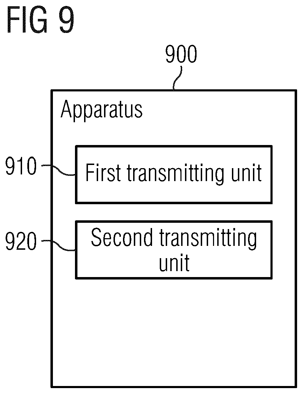

Fig. 9 illustrates an apparatus in accordance with certain embodiments of the invention. Apparatus 900 can be a user equipment, for example. Apparatus 900 may include a first transmitting unit 910 that transmits a first transmission to a network node. The first transmission is transmitted using a first hybrid-automatic-repeat-request process. Apparatus 900 may also include a second transmitting unit 920 that transmits a second transmission using the first hybrid-automatic-repeat-request process. The first transmission and the second transmission are transmitted based on commands of a radio interface scheduler of the network of apparatus 900.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

**Claims**

1. A method, comprising:

   transmitting, by a network node, a first transmission to a user equipment, wherein the first transmission is transmitted using a first hybrid-automatic-repeat-request process; and
   transmitting, by the network node, a second transmission using the first hybrid-automatic-repeat-request process, wherein the second transmission is transmitted before receiving a hybrid-automatic-repeat-request feedback for the first transmission if all hybrid-automatic-repeat-request processes for the user equipment are currently in use.

2. The method according to claim 1, further comprising:

   storing data corresponding to a copy of the first transmission;
   receiving the hybrid-automatic-repeat-request feedback for the first transmission; and
   retransmitting the first transmission using a second hybrid-automatic-repeat-request process, if the received hybrid-automatic-repeat-request feedback for the first transmission is NACK, wherein the retransmitting uses the stored data, and the second hybrid-automatic-repeat-request process uses a redundancy version that is self-decodable.

3. The method according to claim 1, wherein the second transmission is transmitted when there are no other users that can use a radio channel of the network node, and/or when the user equipment has a high quality-of-service requirement or high quality-of-experience requirement compared to other users.

4. The method according to claim 1, wherein the transmitting the first transmission and the transmitting the second transmission are performed only if the user equipment is in a good radio propagation condition.

5. The method according to claim 2, wherein the storing the data corresponding to the copy of the first transmission comprises storing the data in radio-link-control layer.

6. The method according to claim 2, wherein the storing the data corresponding to the copy of the first transmission comprises storing the data in at least one of radio-link protocol data units, media access control protocol data units, and layer 1 protocol data units.

7. An apparatus, comprising:

   at least one processor; and
   at least one memory including computer program code,
   the at least one memory and the computer program code configured, with the at least one processor, to cause the apparatus at least to
   transmit a first transmission to a user equipment, wherein the first transmission is transmitted using a first hybrid-automatic-repeat-request process; and
   transmit a second transmission using the first hybrid-automatic-repeat-request process, wherein the second transmission is transmitted before receiving a hybrid-automatic-repeat-request feedback for the first transmission if all hybrid-automatic-repeat-request processes for the user equipment are currently in use.

8. The apparatus according to claim 7, wherein the apparatus is further caused to:

   store data corresponding to a copy of the first transmission;
   receive the hybrid-automatic-repeat-request feedback for the first transmission; and

retransmit the first transmission using a second hybrid-automatic-repeat-request process, if the received hybrid-automatic-repeat-request feedback for the first transmission is NACK, wherein the retransmitting uses the stored data, and the second hybrid-automatic-repeat-request process uses a redundancy version that is self-decodable.

9. The apparatus according to claim 7, wherein the second transmission is transmitted when there are no other users that can use a radio channel of the network node, and/or when the user equipment has a high quality-of-service requirement or high quality-of-experience requirement compared to other users.

10. The apparatus according to claim 7, wherein the transmitting the first transmission and the transmitting the second transmission are performed only if the user equipment is in a good radio propagation condition.

11. The apparatus according to claim 8, wherein the storing the data corresponding to the copy of the first transmission comprises storing the data in radio-link-control layer.

12. The apparatus according to claim 8, wherein the storing the data corresponding to the copy of the first transmission comprises storing the data in at least one of radio-link protocol data units, media access control protocol data units, and layer 1 protocol data units.

13. A method, comprising:

transmitting, by a user equipment, a first transmission to a network node, wherein the first transmission is transmitted using a first hybrid-automatic-repeat-request process; and
transmitting, by the user equipment, a second transmission using the first hybrid-automatic-repeat-request process, wherein the first transmission and the second transmission are transmitted based on commands of a radio interface scheduler of the network of the user equipment.

14. A computer program product, embodied on a non-transitory computer readable medium, the computer program product configured to control a processor to perform a method according to claims from 1 to 6 or claim 13.

15. An apparatus, comprising:

at least one processor; and
at least one memory including computer program code,
the at least one memory and the computer program code configured, with the at least one processor, to cause the apparatus at least to
transmit a first transmission to a network node, wherein the first transmission is transmitted using a first hybrid-automatic-repeat-request process; and
transmit a second transmission using the first hybrid-automatic-repeat-request process, wherein the first transmission and the second transmission are transmitted based on commands of a radio interface scheduler of the network of the apparatus.

# FIG 1

Single user throughput

☑ Downlink
☐ Uplink

**FIG 2**

RLC buffer + RLC protocol processing

MAC protocol processing

Channel encoding

HARQ retransmission data memory

| Option 1 | Option 2 | Option 3 |
|---|---|---|
| RLC PDU 1 | Transport block 1 | Turbo coded data 1 |
| RLC PDU 2 | Transport block 2 | Turbo coded data 2 |
| ⋮ | ⋮ | ⋮ |
| RLC PDU N | Transport block M | Turbo coded data K |

MAC protocol processing.
RLC re-segmentation (optional)

Channel encoding

HARQ handling (rate matching. creation of edundancy version, ...)

HARQ Process 1   HARQ Process 2   · · ·   HARQ Process 8

Scheduler

EP 3 203 670 A1

# FIG 3

| One way delay | Two way delay | Existing Scheme | | New Scheme | |
|---|---|---|---|---|---|
| | | DL TP/ideal TP (%) | UL TP/ideal TP (%) | DL TP/ideal TP (%) | UL TP/ideal TP (%) |
| 0 | 0 | 100.00 | 100.00 | 100.00 | 100.00 |
| 0.5 | 1 | 88.89 | 50.00 | 100.00 | 100.00 |
| 1 | 2 | 80.00 | 50.00 | 100.00 | 100.00 |
| 1.5 | 3 | 72.73 | 50.00 | 100.00 | 100.00 |
| 2 | 4 | 66.67 | 50.00 | 100.00 | 100.00 |
| 2.5 | 5 | 61.54 | 50.00 | 100.00 | 100.00 |
| 3 | 6 | 57.14 | 50.00 | 100.00 | 100.00 |
| 3.5 | 7 | 53.33 | 50.00 | 100.00 | 100.00 |
| 4 | 8 | 50.00 | 50.00 | 100.00 | 100.00 |
| 4.5 | 9 | 47.06 | 33.33 | 100.00 | 100.00 |
| 5 | 10 | 44.44 | 33.33 | 100.00 | 100.00 |
| 5.5 | 11 | 42.11 | 33.33 | 100.00 | 100.00 |
| 6 | 12 | 40.00 | 33.33 | 100.00 | 100.00 |

BLER=0

# FIG 4

| One way delay | Two way delay | Existing Scheme | | New Scheme | |
|---|---|---|---|---|---|
| | | DL TP/ideal TP (%) | UL TP/ideal TP (%) | DL TP/ideal TP (%) | UL TP/ideal TP (%) |
| 0 | 0 | 90.91 | 90.91 | 90.91 | 90.91 |
| 0.5 | 1 | 80.81 | 45.45 | 90.00 | 90.00 |
| 1 | 2 | 72.73 | 45.45 | 90.00 | 90.00 |
| 1.5 | 3 | 66.12 | 45.45 | 90.00 | 90.00 |
| 2 | 4 | 60.61 | 45.45 | 90.00 | 90.00 |
| 2.5 | 5 | 55.94 | 45.45 | 90.00 | 90.00 |
| 3 | 6 | 51.95 | 45.45 | 90.00 | 90.00 |
| 3.5 | 7 | 48.48 | 45.45 | 90.00 | 90.00 |
| 4 | 8 | 45.45 | 45.45 | 90.00 | 90.00 |
| 4.5 | 9 | 42.78 | 30.30 | 90.00 | 90.00 |
| 5 | 10 | 40.40 | 30.30 | 90.00 | 90.00 |
| 5.5 | 11 | 38.28 | 30.30 | 90.00 | 90.00 |
| 6 | 12 | 36.36 | 30.30 | 90.00 | 90.00 |

10% BLER

# FIG 5

Transmitting a first transmission — 510

↓

Transmitting a second transmission — 520

# FIG 6

Transmitting a first transmission — 610

↓

Transmitting a second transmission — 620

## FIG 7

## FIG 8

FIG 9

900

Apparatus

910 — First transmitting unit

920 — Second transmitting unit

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/132204 A2 (INTERDIGITAL PATENT HOLDINGS [US]; PELLETIER BENOIT [CA]; MARINIER PAU) 29 October 2009 (2009-10-29) | 13-15 | INV.<br>H04L1/18 |
| A | * abstract *<br>* figures 1, 2 *<br>* paragraphs [0011], [0030] - [0034] * | 1-12 | |
| X | EP 2 836 044 A1 (PANASONIC IP CORP AMERICA [US]) 11 February 2015 (2015-02-11) | 13-15 | |
| A | * abstract *<br>* figure 4 *<br>* paragraphs [0043], [0044] * | 1-12 | |

-----

-----

TECHNICAL FIELDS
SEARCHED (IPC)

H04L

The present search report has been drawn up for all claims

| Place of search | Date of completion of the search | Examiner |
|---|---|---|
| The Hague | 22 June 2017 | Xu, Yuhuan |

EPO FORM 1503 03.82 (P04C01)

## ANNEX TO THE EUROPEAN SEARCH REPORT
## ON EUROPEAN PATENT APPLICATION NO.

EP 17 15 1710

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2017

| Patent document cited in search report | Publication date | Patent family member(s) | Publication date |
|---|---|---|---|
| WO 2009132204 A2 | 29-10-2009 | AR 071504 A1<br>TW 200947938 A<br>US 2009290559 A1<br>WO 2009132204 A2 | 23-06-2010<br>16-11-2009<br>26-11-2009<br>29-10-2009 |
| EP 2836044 A1 | 11-02-2015 | EP 2836044 A1<br>EP 3031275 A1<br>JP 2016532370 A<br>US 2016164643 A1<br>WO 2015018680 A1 | 11-02-2015<br>15-06-2016<br>13-10-2016<br>09-06-2016<br>12-02-2015 |

EPO FORM P0459

For more details about this annex : see Official Journal of the European Patent Office, No. 12/82